# EUROPEAN PATENT APPLICATION

(11) **EP 4 763 812 A1**
(43) Date of publication of application: **24.06.2026**
(21) Application number: 25227068.1
(22) Date of filing: 23.12.2025
(51) Int. Cl.: C02F 9/00, C02F 1/04, C02F 1/20, C02F 1/24, C02F 1/42, C02F 1/44, C02F 1/469

(54) **METHOD FOR THE TREATMENT OF AN AQUEOUS STREAM**

(30) Priority: 23.12.2024 NL 2039459
(71) Applicant: KWR Water B.V., 3433 PE Nieuwegein (NL)
(72) Inventor: DE WAAL, Luuk, 3433 PE NIEUWEGEIN (NL); CORNELISSEN, Emile Robin, 3433 PE NIEUWEGEIN (NL); RIJNAARTS, Timon, 3433 PE NIEUWEGEIN (NL); VRIJHOEVEN, Tessa Naomi, 3433 PE NIEUWEGEIN (NL)
(74) Representative: Algemeen Octrooi- en Merkenbureau B.V.

(57) **Abstract**

The present invention relates to a method for the treatment of an aqueous stream containing one or more constituents, such as ions, acids, bases, natural organic matter, particles, metals and organic impurities, for obtaining one or more substreams in which the concentration of one or more constituents is increased compared to the starting aqueous stream.

## Description

The present invention relates to a method for the treatment of an aqueous stream containing one or more constituents, such as ions, acids, bases, natural organic matter, particles, metals and organic impurities, for obtaining one or more sub-streams in which the concentration of one or more constituents is increased compared to the starting aqueous stream. Furthermore, the present invention relates to the use of one or more sub-streams in which the concentration of one or more constituents is increased compared to the starting aqueous stream.

Methods for treating aqueous streams are well known in the art. European patent EP 2 727 883 provides a method for the sustainable purification of water by use of a number of treatment steps including (membrane) filtration, water softening and aeration, wherein the following steps are applied: the vacuum degassing of water, the combustion of the obtained gases and the further treatment of the obtained degassed water in one or more treatment steps, wherein particular the released combustion products are CO₂ and water, energy, heat at least partially recovered in one or more of the treatment steps mentioned, wherein the degassed water is subjected to pre-filtration, after which the pre-filtered water is subjected to a water softening, wherein at least part of the CO₂ formed is fed into the previous water softening, wherein the water softening used includes an ion exchange process and a pellet water softening.

European patent EP 3 162 770 provides a method for the efficient recycling of a stream containing iron sludge, wherein the following steps are involved, namely: subjecting the aqueous product stream to a filtration treatment for the recovery of salt and then mixing it in a certain quantity with a stream containing iron sludge, wherein the flow thus mixed is applied as an iron-containing nutrient in an agricultural context.

Other processes for treating aqueous streams for the possible recovery of valuable constituents or for the production of water of drinking water quality are disclosed, for example, in US 2008 029456, US 2010 0163471, US 10 059 611, US11 351 475 and US 9 73 7827.

US 2024/198288 refers to a system, consisting of a water pre-treatment system configured to receive a seawater stream and generate a pre-treated feed stream based on that seawater stream, a nanofiltration system (NF) configured to receive the pre-treated feed stream and generate an NF permeate stream and an NF filtrate stream, wherein the NF permeate stream contains monovalent salts and the NF filtrate stream contains divalent salts, a reverse osmosis (RO) system configured to receive the NF permeate stream and generate an RO concentrate stream and desalinated water, a monovalent (MV) mineral recovery system, configured to receive the RO concentrate stream and generate a concentrated MV salt recycling stream; and a seawater recycling system, configured to generate a recycled seawater stream based on the MV salt recycling stream, wherein the seawater recycling system is configured to direct the recycled seawater stream to the NF system.

AT410314 relates to a plant for the treatment of organically contaminated wastewater, comprising at least one crossflow membrane filtration apparatus and at least a hydrogen peroxide catalytic oxidation reactor, wherein the crossflow membrane filtration apparatus consists of at least one ultrafiltration apparatus and at least one downstream inverted osmosis-filtration- apparatus, wherein the permeate pipe of the ultrafiltration apparatus is connected to the inlet of the reverse osmosis-filtration-apparatus, whose permeate outlet is a process water flow and wherein the concentrate outlets of the ultrafiltration apparatus and reverse osmosis filtration apparatus at least partially flow into a supply tank for receiving an intermediate wastewater stream, and the supply tank is connected to a reactor for carrying out a catalytic oxidation of the organic constituents of the intermediate wastewater stream equipped with storage vessels for adding iron(II) salt, acid, base and hydrogen peroxide. The outlet is connected to a filter device for filtering precipitated iron catalyst from a wastewater stream obtained as a filtrate.

US 2018/265387 relates to a method of purifying water using at least a unit for capturing one or more ions and at least a membrane filtration unit, wherein a stream of water is drawn from a source and fed into the unit for the capture of one or more ions, wherein the stream of water leaving the unit is fed into the membrane filtration unit, and wherein at least a concentrate stream and a permeate stream are obtained in the membrane filtration unit, wherein at least a portion of the captured ions is added to the permeate stream for obtaining a permeate stream enriched with one or more ions.

Existing (fresh) water treatment plants are generally unable to meet (a) higher requirements for freshwater quality and (b) stricter discharge requirements at the same time. Because not only the quality, but also the availability in time and place (quantity) of (fresh) water is under pressure, there is a need for a robust, scalable and circular (fresh) water treatment concept that is - preferably - universally applicable to (fresh) water sources.

Such a method provides for a construction consisting of a loop of technically feasible treatment technologies that - as a combination - can simultaneously meet one or more challenges in terms of legislation, water quantity and water quality. Moreover, such a method is in line with the EU's ambition for the circular economy 2050, wherein the valuable constituents originally present in the aqueous sources can be usefully reused, together with the (fresh) water itself.

In order to meet water quality standards and/or to reuse (fresh) water, membrane filtration installations, in particular reverse osmosis membrane filtration installations, are frequently and increasingly used in current practice. Such installations are often implemented behind or parallel to (part of) the existing water treatment technologies. The consequence of membrane filtration is that the overall (fresh) water efficiency is drastically reduced, as large and dilute discharge streams, also referred to as brine or concentrate stream, are produced. However, such setups are only applicable to locations (or time periods) when sufficient fresh water is available to compensate for the reduced water efficiency of the treatment system. In time periods when (fresh) water is scarce and/or the (fresh) water demand is high, the water quality of the receiving water body of the discharge streams is more negatively affected and the quantity demand for (fresh) water puts a heavy burden on other (fresh) water-dependent entities or consumers, for example nature, the transport of goods by ship and the irrigation of agricultural plots. The European Union adopted an action plan in 2021 - as part of the Green Deal - entitled "towards zero pollution of air, water and (under)ground". The SOS-ZEROPOL2030 project, launched in 2022, develops a holistic framework to help the EU achieve zero pollution in European seas by 2030, and draws the following conclusions for four priority pollutants: zero microplastic pollution 2030 "unfeasible", zero underwater noise pollution 2030 "unfeasible", zero PFAS pollution 2030 "challenging to impossible" and zero nutrient pollution 2030 "challenging". Despite the clear European ambition, it can be assumed that even in term, conventional water treatment systems will not be able to meet all product quality and discharge quality requirements, jeopardising the overall operational robustness and their operational stability.

An object of the present invention is to provide a method for the treatment of an aqueous stream containing one or more constituents, such as ions, acids, bases, natural organic matter, particulates, (dissolved) gases, metals and organic contaminants, for obtaining of one or more sub-streams in which the concentration of one or more constituents is increased compared to the starting aqueous stream.

Another object of the present invention is to usefully reuse sub-streams in which the concentration of one or more components is increased compared to the starting aqueous stream.

Another object of the present invention is to convert a water source, in particular a fresh water source, into a number of sub-streams that have a high degree of purity, so that these sub-streams can in turn be used for other applications, thus effectively creating a closed cycle for both water and raw materials.

The present invention thus relates to a method for the treatment of an aqueous stream containing one or more constituents, such as ions, acids, bases, (dissolved) gases, organic matter, suspended solids, metals, and organic impurities, for obtaining one or more sub-streams in which the concentration of one or more constituents is increased compared to the starting aqueous stream, said method includes the following steps:
(i) The provision of an aqueous stream, in particular from a freshwater source,
(ii) The fractionation of the aqueous stream of (i) for obtaining three or more fractionated streams, wherein at least one of the fractionated streams thus obtained is chosen from the group of enriched in monovalent salts, one from the group of enriched in di- and multivalent salts and one from the group of enriched in organic compounds.
(iii) The treatment of one or more fractionated streams of (ii) for obtaining one or more sub-streams in which the concentration of one or more constituents is increased compared to the aqueous stream of (i),
wherein, before step (ii) is performed, the aqueous stream originating from step (i) is subjected to a pre-treatment for the removal of one or more of coarse solids, suspended solids, solutes, and dissolved gases.

According to such a method the present inventors have determined that one or more objectives are met. According to the present method it is now possible to convert a water source, in particular a freshwater source, into one or more of demineralized water, salines, organic solutions, solids and gases of such purity and quality that the sub-streams thus obtained are suitable for recovery, use and/or re-use in low-quality and high-quality applications.

The aforementioned pre-treatment for the removal of one or more of coarse solids, suspended solids, dissolved solids, and dissolved gases is aimed in particular at the removal of one or more (anthropogenic) organic micropollutants, possibly in combination with recovery of one or more of dissolved gases, coarse solids, suspended solids, and/or dissolved substances.

The term 'increased compared to' means that the concentration of one or more constituents is increased in absolute and/or relative terms compared to the aqueous stream according to (i). It should be noted that for certain constituents, such as salts and organic substances, the sub-stream formed in the present invention has an absolutely higher concentration than the feed stream for that specific component. However, it should be clear that for certain constituents, such as dissolved gases, which have the same concentration in all sub-streams as in the feed stream but have therefore become relatively more concentrated compared to the other constituents in the sub-stream compared to the feed stream. In addition, it is clear that in the present method for the treatment of an aqueous stream containing one or more of the aforementioned constituents, it is possible that only some of the aforementioned constituents will be removed.

The above-mentioned term "sub-streams" should be understood to mean a stream that can be regarded as a liquid, a gas, a solid, a precipitate, a foam, a suspension or as a slurry.

The aforementioned term "one or more sub-streams in which the concentration of one or more constituents is increased compared to the starting aqueous stream" must be understood to mean that it can be both the relative and the absolute concentration. If, for example, the concentration of component X in the starting aqueous stream has the value Y1, and the concentration of component X in the sub-stream has the value Y2, then Y2>Y1 holds. In a selective separation, the ratio between component X and other constituents from solution is increased or decreased, depending on the intended purpose of the separation. In a certain embodiment, it is possible that in a selective separation the ratio of component X to other constituents in the (sub)stream changes. An example of such a situation is the removal of sulfate from a solution using an ion-exchange resin, which, for example, increases the chloride concentration in the sub-stream and sharply decreases the sulfate concentration in solution. The sulfate concentration on the resin naturally increases in this process.

Although it has been indicated above that the aqueous stream originates in particular from a freshwater source, e.g. groundwater, surface water, bank filtrate, dune filtrate, rainwater, irrigation water, cooling water, process water and incoming raw or primary/secondary/tertiary/quaternary-treated (waste) water from a municipal or industrial wastewater treatment plant, it should be clear that the present invention is also suitable for (slightly) brackish, concentrated and/or mixed (fresh) water streams. An example of a feed stream is a solution of water with dissolved organic substances and/or salts, but also mixtures of water and other liquids, in particular a (stable) emulsion of water and an organic solvent. The pre-treatment of a freshwater source includes one or more of the following steps, chosen from the group of particle/oil removal, also referred to as primary treatment, biodegradable carbon removal, also referred to as secondary treatment, nutrient removal, also referred to as tertiary treatment and/or organic (micro)contaminant removal, also referred to as quaternary treatment.

This pre-treatment can include steps such as (biologically active) adsorption-media filtration including (granular) activated carbon filtration, biological activated carbon filtration with oxygen dosing (BODAC) and alternative adsorbents filtration with, for example, biochar, dexsorb or pillaring, activated sludge including aerobic and anaerobic treatment, aeration, soil or bank passage, (selective) capacitive deionization, cavitation/ultrasonic, (selective) electrodialysis including electrodialysis-reversal, donnan dialysis, bipolar membrane electrodialysis and monovalent-selective (capacitive) electrodialysis and other variations of this separation technique wherein by means of an electric potential difference (and charge- or size-selective membranes between compartments) charged solutes and/or ions are separated, electrocoagulation, fine filtration including fine sieves, micro sieves, Dia-filtration, candle filtration, bag filtration and cloth filtration, flotation including dissolved air flotation (DAF), forward osmosis, coarse filtration including sand trap, grids and screens, thermal processing techniques including high pressure wet oxidation, low pressure wet oxidation, hydrothermal carbonization (HTC), hydrothermal liquefaction (HTL), pyrolysis, Themista, thermal pressure hydrolysis, Torwash treatment, combustion and gasification, ion exchange including cation resins, anion resins or chelating resins for salts or (charged) solutes including (organic) micropollutants, (biologically active) media filtration including fast sand filtration, slow sand filtration, continuous filtration (dynasand) and double layer filtration with, for example, an anthracite and sand layer, membrane bio reactors including aerobic and anaerobic treatment, membrane contactors, membrane filtration including microfiltration, (spiral wound/capillary/ceramic) ultrafiltration, (spiral-wound/capillary/ceramic) nanofiltration and reverse osmosis membrane filtration including osmotic mediated RO (OMRO), flow-reversal RO (FRRO) and closed-circuit RO (CCRO), natural purification steps including helophyte filters, water harmonicas, (waste) water purification ponds, (constructed) wetlands, bio-remediation systems and phyto-remediation systems, (advanced) oxidation including UV/H₂O₂, O₃, O₃/UV/H₂O₂ and electrochemical oxidation, oil-water separators, degassing including tower degassing, vacuum degassing and membrane degassing, softening including pellet softening and basin softening, plasma treatment, pulverized coal dosing, (advanced) reduction including UV/SO₃/I and vacuum-UV sulphite (VUV/SO₃), foam fractionation, sedimentation including settling basins, coagulation flocculation with trivalent iron salt, coagulation flocculation with Ferrate, coagulation flocculation with trivalent aluminum salt and lamellar settling, supercritical water treatment including supercritical water (co-)oxidation, supercritical water partial (co-)oxidation and supercritical water (co-)gasification, UV irradiation including vacuum UV (VUV), digestion including aerobic and anaerobic treatment and upward anaerobic sludge blanket (UASB), liquid-liquid extraction including solvent extraction desalination and combinations of the above techniques for example in a single process unit operation, for example Electrocoagulation-Flotation-Sedimentation (EFS), Powdered Activated Carbon in Activated Sludge (PACAS), advanced oxidation-coagulation by Ferrate dosing, (continuous) electro-deionization and electrochemical adsorption by Nyex Rosalox.

The one or more fractionated streams obtained are chosen from the group of high in monovalent salts, rich in di- and multivalent salts and rich in organic compounds, or a combination thereof. In the fractionation step, the water source is thus split into separate solutions enriched with (i) single-charged ions (monovalent salt fraction), (ii) multi-charged ions (di- and multivalent salt fraction) and (iii) hydrocarbon-containing constituents (organic fraction, i.e. at least one carbon atom and one hydrogen atom in the compound), wherein the term "enriched" must be seen compared to the composition of the water source that was taken into account, also referred to as nutrient water, in an absolute or relative sense. The terms "rich in" and "enriched in" are used in various places in the present description and have the same meanings among themselves. The term "enriched" can also be understood as purer, i.e. more pure, i.e. with a higher purity.

According to the present invention, the organic constituents within the organically enriched fraction can be separated from salt(s), separated from water and salt(s), split into separate organic subfractions, and/or removed by (in)complete degradation. So-called target ions (such as bicarbonate, calcium, chloride, sodium, sulphate, magnesium, potassium, silicon, (dissolved organic carbon, nitrate, ammonium, and iron) can be removed or (in)directly recovered from the solution in the purest possible solid, liquid, or gaseous form. The recovery of salts can take place by means of a concentration step (e.g. by electrodialysis, nanofiltration, ion exchange), an (electrochemical) conversion step (e.g. by means of bipolar membrane electrodialysis) and/or via direct precipitation from the solution (e.g. by means of evaporation techniques (multi-stage flash evaporation, multi-effect distillation), precipitation techniques ((eutectic) freeze crystallization), chemical dosing (pH correction) and other precipitation techniques) or indirectly through the exchange of target ions with non-target ions, e.g. from a stationary phase, and subsequent recovery of salts, e.g. from the regeneration fluid of a stationary phase.

According to an example, in step (iii), a fractionated stream rich in monovalent salts compared to the concentration of monovalent salts in the aqueous stream according to (i) is treated for obtaining one or more sub-streams in which the concentration of one or more constituents is increased compared to the aqueous stream according to (i), wherein the constituents are chosen from the group of inorganic carbon, nitrogen compounds, saline and remaining compounds, or a combination thereof.

According to an example, the inorganic carbon is chosen from the group of HCO₃ and CO₂, or a combination thereof.

According to an example, the nitrogen compounds are chosen from N₂, NH₄, NH₃, NxO, including NO and N₂O, and NOx, or a combination thereof.

According to an example, the saline is chosen from Na, K, Cl and NO₃, or a combination thereof.

According to an example, the remaining compounds are chosen from CN, F, Br, Li, SiO₄, HS and Cu, or a combination thereof.

According to an example, in step (iii) of the present method, a fractionated stream rich in di- and multivalent salts compared to the concentration of di- and multivalent salts in the aqueous stream according to (i) is treated for obtaining one or more sub-streams in which the concentration of one or more constituents is increased compared to the aqueous stream according to i), wherein the constituents are chosen from the group of saline, iron compounds, carbonate compounds, sulphate compounds, hydroxide compounds, and remaining compounds, or a combination thereof.

According to an example, the saline is chosen from Na, K, Cl and NO₃, or a combination thereof.

According to an example, the iron compounds are chosen from Fe, FeₓO_{y} and Fe(OH)₃, or a combination thereof.

According to an example, the carbonate compounds are chosen from CaCO₃, MgCO₃ and SrCO₃, or a combination thereof.

According to an example, the sulfate compounds are chosen from CaSO₄, MgSO₄ and BaSO₄, or a combination thereof.

According to an example, the hydroxide compounds are chosen from Ca(OH)₂ and Mg(OH)₂, or a combination thereof.

According to an example, the remaining compounds are chosen from Mn, P, Se, As, Al, Cd, Pb, Ni and Co, or a combination thereof.

According to an example, in step (iii) of the present method, a fractionated stream rich in organic compounds compared to the concentration of organic compounds in the aqueous stream according to (i) is treated for obtaining one or more sub-streams in which the concentration of one or more constituents is increased compared to the aqueous stream according to i), wherein the constituents are chosen from the group of natural organic matter and organic (micro)pollutants, or a combination thereof.

According to an example, natural organic material is chosen from proteins and biopolymers including humic materials, comprising humic acids and fulvic acids, or a combination thereof.

According to an example, the organic micropollutants are chosen from PFAS and erythromycin A, or a combination thereof.

According to an example of the present method step ii) includes one or more process steps, chosen from the group of (biologically active) adsorption-media filtration including (granular) activated carbon filtration, biological activated carbon filtration with oxygen dosing (BODAC) and alternative adsorbents filtration with, for example, biochar, dexsorb or pillaring, (selective) capacitive deionization, (selective) electrodialysis including electrodialysis-reversal, donnan dialysis, bipolar membrane electrodialysis and monovalent-selective (capacitive) electrodialysis and other variations of this separation technique wherein by means of an electric potential difference (and charge- or size-selective membranes between compartments) charged solutes and/or ions are separated, fine filtration including fine sieves, micro sieves, dia-filtration, candle filtration, bag filtration and cloth filtration, flotation including dissolved air flotation (DAF), forward osmosis, coarse filtration including sand trap, grids and screens, ion exchange including cation resins, anion resins or chelating resins for salts or (charged) solutes including (organic) micropollutants, (biologically active) media filtration including fast sand filtration, slow sand filtration, continuous filtration (dynasand) and double-layer filtration with, for example, an anthracite and sand layer, membrane contactors, membrane filtration including microfiltration, (spiral-wound/capillary/ceramic) ultrafiltration, (spiral-wound/capillary/ceramic) nanofiltration and reverse osmosis membrane filtration including osmotic mediated RO (OMRO), flow-reversal RO (FRRO) and closed-circuit RO (CCRO), natural purification steps including helophyte filters, water harmonicas, (waste)water purification ponds, (constructed) wetlands, bio-remediation systems and phyto-remediation systems, (advanced) oxidation including UV/H₂O₂, O₃, O₃/UV/H₂O₂ and electrochemical oxidation, oil-water separators, degassing including tower degassing, vacuum degassing and membrane degassing, softening including pellet softening and basin softening, pulverized coal dosing, foam fractionation, sedimentation including settling basins, coagulation-flocculation with trivalent iron salt, coagulation-flocculation with Ferrate, coagulation-flocculation with trivalent aluminum-salt and lamellae settling, supercritical water treatment including supercritical water (co-)oxidation, supercritical water partial (co-)oxidation and supercritical water (co-)gasification, (eutectic freeze) crystallization including precipitation formation of, for example, salts or organic constituents, fermentation including aerobic and anaerobic treatment and upward anaerobic sludge blanket (UASB), liquid-liquid extraction including solvent extraction desalination and combinations of the above techniques for example in a single process unit operation, for example Electrocoagulation-Flotation-Sedimentation (EFS), Powdered Activated Carbon in Activated Sludge (PACAS), advanced oxidation-coagulation by Ferrate dosing, (continuous) electro deionization and electrochemical adsorption by Nyex Rosalox.

According to an example of the present method step iii) includes one or more process steps, chosen from the group of (biologically active) adsorption-media filtration including (granular) activated carbon filtration, biological activated carbon filtration with oxygen dosing (BODAC) and alternative adsorbents filtration with, for example, biochar, dexsorb or pillaring, aeration, (selective) capacitive deionization, clathrate desalination, complexing (e.g. with proteins), (selective) electrodialysis including electrodialysis-reversal, donnan dialysis, bipolar membrane electrodialysis and monovalent-selective (capacitive) electrodialysis and other variations of this separation technique wherein by means of an electric potential difference (and charge- or size-selective membranes between compartments) charged solutes and/or ions are separated, fine filtration including fine sieves, micro sieves, dia-filtration, candle filtration, bag filtration and cloth filtration, flotation including dissolved air flotation (DAF), forward osmosis, thermal processing techniques including high pressure wet oxidation, low pressure wet oxidation, hydrothermal carbonization (HTC), hydrothermal liquefaction (HTL), pyrolysis, Themista, thermal pressure hydrolysis, Torwash treatment, combustion and gasification, humidification-dehumidification, ion exchange including cation resins, anion resins or chelating resins for salts or (charged) solutes including (organic) micropollutants, ball mill, (biologically active) media filtration including fast sand filtration, slow sand filtration, continuous filtration (dynasand) and double layer filtration with, for example, an anthracite and sand layer, membrane bio reactors including aerobic and anaerobic treatment, membrane contactors, membrane filtration including microfiltration, (spiral wound/capillary/ceramic) ultrafiltration, (spiral wound/capillary/ceramic) nanofiltration and reverse osmosis membrane filtration including osmotic mediated RO (OMRO), flow-reversal RO (FRRO) and closed-circuit RO (CCRO), natural purification steps including helophyte filters, water harmonicas, (waste) water purification ponds, (constructed) wetlands, bio-remediation systems and phyto-remediation systems, (advanced) oxidation including UV/H₂O₂, O₃, O₃/UV/H₂O₂ and electrochemical oxidation, degassing including tower degassing, vacuum degassing and membrane degassing, softening including pellet softening and basin softening, plasma treatment, pulverized coal dosing, (advanced) reduction including UV/SO₃/I and vacuum-UV sulphite (VUV/SO₃), foam fractionation, sedimentation including settling basins, coagulation-flocculation with trivalent iron salt, coagulation-flocculation with Ferrate, coagulation-flocculation with trivalent aluminum-salt and lamellae settling, supercritical water treatment including supercritical water (co-)oxidation, supercritical water partial (co-)oxidation and supercritical water (co-)gasification, UV irradiation including vacuum UV (VUV), (eutectic freeze) crystallization including precipitation formation of, for example, salts or organic constituents, evaporation techniques such as multi-effect distillation, mechanical vapor compression, sunlight/solar assisted evaporation, membrane distillation and multi-stage flash distillation, fermentation including aerobic and anaerobic treatment and upward anaerobic sludge blanket (UASB), liquid-liquid extraction including solvent extraction desalination and combinations of the above techniques e.g. in a single process unit operation, e.g. Electrocoagulation-Flotation-Sedimentation (EFS), Powdered Activated Carbon in Activated Sludge (PACAS), advanced oxidation-coagulation by Ferrate dosing, (continuous) electro-deionization and electrochemical adsorption by Nyex Rosalox.

According to the present method, before step (ii) takes place, the aqueous stream originating from step (i) is subjected to a pre-treatment for the removal or recovery of one or more of dissolved gases, coarse solids, suspended solids, and/or solutes. Examples of the aqueous stream, namely freshwater and/or (light) brackish water, are for example groundwater, surface water, bank filtrate, dune filtrate, rainwater, irrigation water, cooling water, process water and incoming or (primary/secondary/tertiary/quaternarily treated) (waste) water from a municipal or industrial wastewater treatment plant, which water sources may contain, for example, iron (II), (dissolved ion, Fe²⁺) and ammonium (NH₄⁺).

During a pre-treatment, in particular aeration and rapid sand filtration, of the aforementioned water types, iron(II) is oxidized by oxygen to iron (hydr)oxide(s) wherein - among other things - silicon tends to (co-)precipitation wherein constituents (as well as and with the iron) end up in the iron sludge sub-stream. Biological activity in the (fast) sand filters converts ammonium into nitrate through a process called nitrification. During the pre-treatment of surface water, a metal salt, such as iron(III) (Fe³⁺) is usually added to the water as a coagulant for the removal of organic carbon and/or phosphate. The resulting coagulated material is removed and collected as an iron sludge part stream.

The present invention also relates to the use of iron sludge obtained from a method as discussed above for the removal of one or more of phosphate, hydrogen sulphide and arsenic from an aqueous stream. Such iron sludge can be processed into so-called pellets under the use of a suitable binder, which pellets can be used as an adsorbent.

The present invention also relates to the use of iron sludge obtained from a method as discussed above for use as an ingredient for building materials, for example in the brick industry.

The present invention also relates to the use of iron sludge obtained from a method as discussed above as a soil improver.

The present invention also relates to the use of iron sludge obtained from a method as discussed above as a coagulant in the (waste) water treatment after acidification.

The present invention also relates to the use of sub-streams rich in one or more of Ca, Mg, OH, SO₄, CO₂ and HCO₃, obtained from a method as discussed above for remineralisation for the production of drinking water. The aforementioned sub-streams can also be used for the production of high-quality drinking water. In addition, the high-quality water can also be used as irrigation water in greenhouse horticulture (low sodium), as process water in industries, for steam production and as a raw material for the production of hydrogen via, for example, electrolysis.

The present invention also relates to the use of sub-streams rich in one or more of Ca, Mg, OH, SO₄, CO₂ and HCO₃, obtained from a method as discussed above as a filler for cosmetic products, for example.

The present invention also relates to the use of sub-streams rich in Na(K)Cl(NO₃) obtained from a method as discussed above for the production of one or more of HCl, NaOH, KOH and HNO₃.

The present invention also relates to the use of sub-streams rich in Na(K)Cl(NO₃) obtained from a method as discussed above for the regeneration of one or more of one or more of highly acidic or basic, weakly acidic or basic and/or chelating cation- and anion-laden ion exchange resins.

The present invention also relates to the use of sub-streams rich in Na(K)Cl(NO₃) obtained from a method as discussed above as a road salt to enable road traffic in winter conditions.

The present invention also relates to the use of sub-streams rich in Na(K)Cl(NO₃) obtained from a method as discussed above as process water for industrial applications such as mining wherein the sub-stream can be used for salt production and use after further saturation of the sub-stream in salt caverns and as a draw solution for forward osmosis membrane technology for pre-concentrating other sub-streams.

The present invention is explained in more detail below on the basis of a schematic overview, which overview should only be seen as an explanation of the present invention. The Figures shown and discussed here are to be regarded for a better understanding of the present invention and should in no way be regarded as a restriction on the scope of protection.
Figure 1 shows a schematic overview of a method for treating an aqueous stream.
Figure 2 shows a more detailed overview of a method for treating an aqueous stream, comprising conditioning, fractionation, sorting, concentration, and valorisation.
Figure 3 shows a schematic overview of another embodiment of a method for treating an aqueous stream.
Figure 4 shows a schematic overview of another embodiment of a method for treating an aqueous stream.

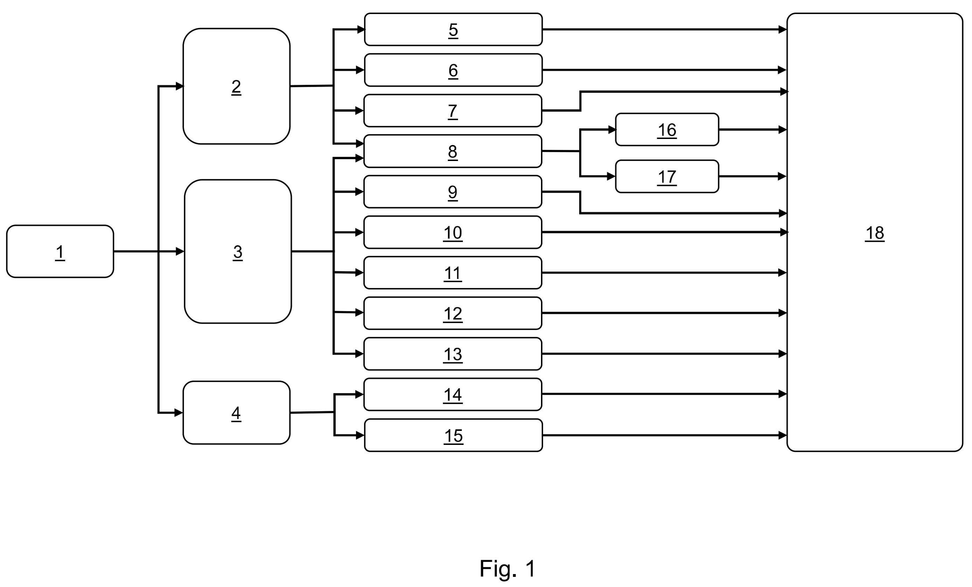

The attached figure 1 shows an overview of a method for treating an aqueous stream according to the present invention. An aqueous stream containing one or more constituents, such as ions, acids, metals and organic impurities, indicated by reference number 1, is fractionated into three streams, namely a stream 2 rich in monovalent salts, a stream 3 rich in di- and multivalent salts and a stream 4 rich in organic compounds, or a combination thereof.

The aqueous stream fractionation step 1 can be performed by one or more process steps chosen from the group of (biologically active) adsorption-media filtration including (granular) activated carbon filtration, biological activated carbon filtration with oxygen dosing (BODAC) and alternative adsorbents filtration with e.g. biochar, dexsorb or pillaring, (selective) capacitive deionization, (selective) electrodialysis including electrodialysis-reversal, donnan dialysis, bipolar membrane electrodialysis and monovalent-selective (capacitive) electrodialysis and other variations of this separation technique wherein by means of an electric potential difference (and charge- or size-selective membranes between compartments) charged disolutes and/or ions are separated, fine filtration including fine sieves, micro sieves, dia-filtration, candle filtration, bag filtration and cloth filtration, flotation including dissolved air flotation (DAF), forward osmosis, coarse filtration including sand trap, grids and screens, ion exchange including cation resins, anion resins or chelating resins for salts or (charged) solutes including (organic) micropollutants, (biologically active) media filtration including fast sand filtration, slow sand filtration, continuous filtration (dynasand) and double layer filtration with, for example, an anthracite and sand layer, membrane contactors, membrane filtration including microfiltration, (spiral-wound/capillary/ceramic) ultrafiltration, (spiral-wound/capillary/ceramic) nanofiltration and reverse osmosis membrane filtration including osmotic mediated RO (OMRO), flow-reversal RO (FRRO) and closed-circuit RO (CCRO), natural purification steps including helophyte filters, water harmonicas, (waste) water purification ponds, (constructed) wetlands, bio-remediation systems and phyto-remediation systems, (advanced) oxidation including UV/H₂O₂, O₃, O₃/UV/H₂O₂ and electrochemical oxidation, oil-water separators, degassing including tower degassing, vacuum degassing and membrane degassing, softening including pellet softening and basin softening, pulverized coal dosing, foam fractionation, sedimentation including settling basins, coagulation flocculation with trivalent iron salt, coagulation flocculation with Ferrate, coagulation flocculation with trivalent aluminum salt and lamella settling, supercritical water treatment including supercritical water (co-)oxidation, supercritical water partial (co-)oxidation and supercritical water (co-)gasification, (eutectic freeze) crystallization including precipitation formation of, for example, salts or organic constituents, fermentation including aerobic and anaerobic treatment and upward anaerobic sludge blanket (UASB), liquid-liquid extraction including solvent extraction desalination and combinations of the above techniques for example in a single process unit operation, e.g. Electrocoagulation-Flotation-Sedimentation (EFS), Powdered Activated Carbon in Activated Sludge (PACAS), advanced oxidation-coagulation by Ferrate dosing, (continuous) electro-deionization and electrochemical adsorption by Nyex Rosalox.

In a subsequent step one or more fractionated streams 2, 3 and 4 are additionally treated for obtaining one or more sub-streams 5, 6, 7, 8, 9, 10, 11, 12, 13, 14, 15 wherein the concentration of one or more constituents in the respective sub-stream is increased compared to the aqueous stream 1.

According to the figure shown, stream 2 rich in monovalent salts is treated in such a way that stream 2 rich in monovalent salts results in a stream 8 of saline and at least one or more of a stream 5 of inorganic carbon, a stream 6 of nitrogen compounds, and a stream 7 of remaining compounds. Examples of constituents present in stream 5 of inorganic carbon are HCO₃ and CO₂. Examples of constituents present in stream 6 of nitrogen compounds are N₂, NH₄, NH₃, NxO, including NO and N₂O, and NOx. Examples of constituents present in stream 7 of remaining compounds are CN, F, Br, Li, SiO₄, HS and Cu. Examples of constituents present in stream 8 of saline are Na, K, Cl and NO₃. It is understood that the masses of the dissolved salts in the (fresh) feed water ultimately determine which substances should be removed and/or exchanged for the salt.

According to the figure shown, stream 3 rich in di- and multivalent salts is treated in such a way that stream 3 rich in di- and multivalent salts results in a stream 8 of saline, and at least one or more of a stream 9 of iron compounds, a stream 10 of carbonate compounds, a stream 11 of sulphate compounds, a stream 12 of hydroxide compounds and a stream 13 of remaining compounds. Examples of constituents present in stream 8 of saline are Na, K, Cl and NO₃. Examples of constituents present in stream 9 of iron compounds are Fe, FeₓO_{y} and Fe(OH)₃. Examples of constituents present in a stream 10 of carbonate compounds are CaCO₃, MgCO₃ and SrCO₃. Examples of constituents present in a stream 11 of sulfate compounds are CaSO₄, MgSO₄ and BaSO₄. Examples of stream 12 of hydroxide compounds are Ca(OH)₂ and Mg(OH)₂. Examples of constituents present in stream 13 of remaining compounds are Mn, P, Se, As, Al, Cd, Pb, Ni and Co. Here too, it is understood that the masses of the dissolved salts in the (fresh) feed water ultimately determine which substances should be removed and/or exchanged against the salt.

According to the figure shown, stream 4 rich in organic compounds is treated in such a way that stream 4 rich in organic compounds results in a stream 14 of natural organic matter and a stream 15 of organic micropollutants. Examples of constituents present in a stream 14 of natural organic matter are proteins and biopolymers including humic materials, such as humic acids and fulvic acids. Examples of constituents present in stream 15 of organic micropollutants are PFAS and erythromycin A.

The figure shown also shows that stream 8 of saline can be further treated for obtaining a solid salt Na(K)Cl(NO₃), indicated by reference number 16, and very pure water, indicated by reference number 17.

The constituents present in each of the sub-streams 5, 6, 7, 8, 9, 10, 11, 12, 13, 14, 15, 16 and 17 can be usefully applied in one or more of the following applications, indicated by reference number 18, remineralisation of drinking water, regeneration of resins, preparation of acids and bases, e.g. NaOH and HCl, (micro-)nutrients, road salt, fillers, (ingredient for) building material, soil improver, production of irrigation water, steam, process water, hydrogen gas, absorbents for phosphate, hydrogen sulphide and arsenic, heat source, synthesis gas and/or energy carrier material.

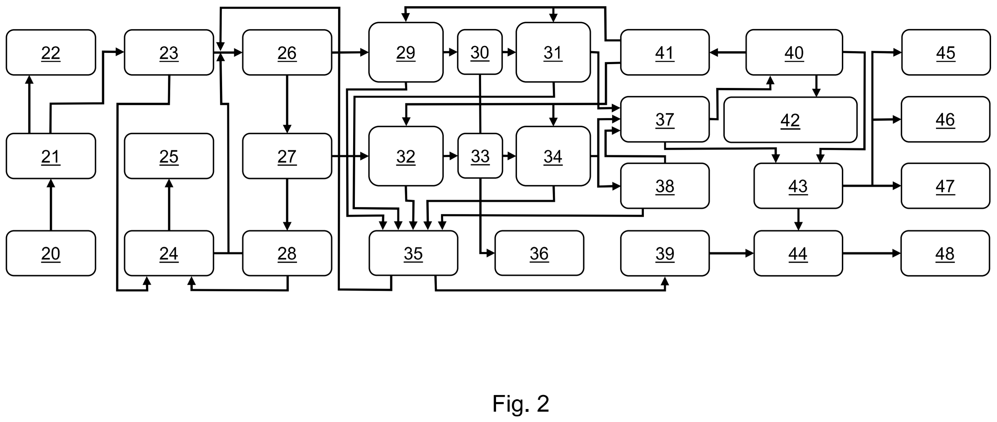

Figure 2 shows a more detailed overview of a method for treating an aqueous stream. Figure 2 can be seen as a clear interpretation of an implementation of a method for treating an aqueous stream. Figure 2 clearly shows that many steps are interconnected. The overview given in Figure 2 can be seen as a method for treating an aqueous stream comprising conditioning, fractionation, sorting, concentration, and valorisation. A number of such interrelated steps will be explained below.

Aqueous stream 20 undergoes a (pre-)treatment 21 wherein an iron-containing sludge stream 22 is obtained and an aqueous stream that is further treated by first foam fractionation 23. Aqueous stream 20 is to be regarded as a water source that is already possible (partially) pre-treated, in particular a pre-treatment aimed at the removal of one or more of coarse constituents, suspended solids, dissolved substances and dissolved gases.

After the first foam fractionation 23, a nanofiltration 26 takes place wherein the resulting streams are further treated in a second nanofiltration 27 and a cation exchange 29. After cation exchange 29, gas stripping 30 and then anion exchange 31 take place. After second nanofiltration 27, cation exchange 32, gas stripping 33 and anion exchange 34 take place in succession. After second nanofiltration 27, a second foam fractionation 28 also takes place, followed by supercritical water treatment 24 wherein high purity gas 25 is produced. The effluent from both anion exchange 31 and anion exchange 34 is fed to reverse osmosis 37, wherein demineralized water of high quality 43 is obtained. The reverse osmosis concentrate 37 can also be subjected to a heat treatment 40 wherein demineralized water of high quality 43 is obtained. The effluent from heat treatment 40 can be used for industrial applications in which, according to an embodiment, a bipolar membrane electrodialysis 42 can be used to form an alkaline and acidic stream. For example, high-quality demineralised water 43 is used for remineralisation purposes 44, for example in the preparation of drinking water 48. The effluent from cation exchange 29, anion exchange 31, cation exchange 32 and anion exchange 34 can be subjected to salt crystal formation by precipitation 35, wherein high-purity salts are obtained, designated by reference number 39, i.e. CaSO₄, CaCO₃ and Mg(OH)₂ and any co-precipitation products such as dolomite (CaMgCO₃). In the steps of gas stripping 30 and gas stripping 33, a gas mixture is obtained that mainly contains CO₂, N₂ and O₂, wherein traces of CH₄ and H₂S may be present. The effluent from anion exchange 34 can still be subjected to a third nanofiltration 38. Examples of applications that are possible with the method according to Figure 2 include: production of hydrogen via an electrolyser 45, irrigation water for crops (horticulture) 46 and cooling and process water for industrial applications 47.

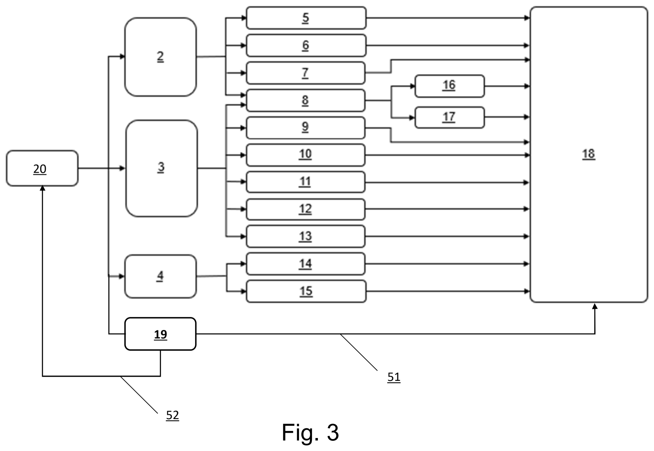

Figure 3 shows a schematic overview of another embodiment of a method for treating an aqueous stream, in which, for example, a step of reverse osmosis, indicated by reference number 19, is applied to the (pre-treated) feed stream. According to such a method, mono-, multivalent and organic constituents are concentrated in a remaining stream, indicated by reference number 52, namely concentrate, and a product stream of high-quality water, indicated by reference number 51, namely permeate, is also produced. Reverse osmosis 19 produces a fraction of 52 which is thus enriched in mono-, multivalent and organic constituents and then used as feed water for further fractionation. In such an embodiment, feed water is concentrated before fractionation takes place in one or more fractionated streams 2, 3 and 4. The aforementioned embodiment of implementation can therefore be interpreted as a situation in which concentrated (fresh) water is used as a feed for (fresh) water.

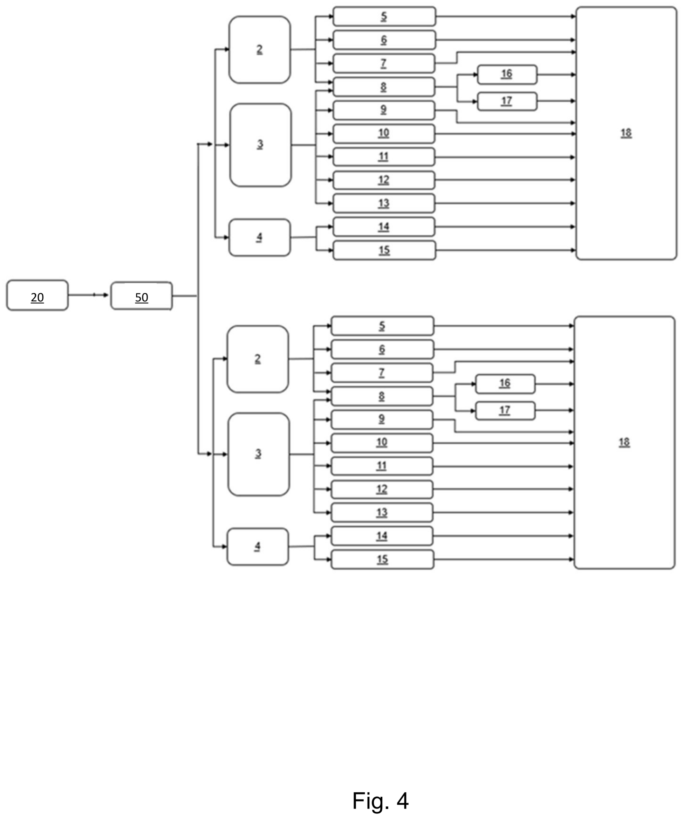

Figure 4 shows a schematic overview of another embodiment of a method for treating an aqueous stream. The embodiment shown in Figure 4 relates to the application of monovalent selective (capacitive) electrodialysis, indicated by reference number 50, to an aqueous stream 1. According to such an embodiment, aqueous stream 1 is thus fractionated into two separate fractions, namely a) multivalent salts, uncharged substances and charged 'large' (organic) constituents (fraction a) go to the top of the scheme and b) a stream enriched in monovalent salts and charged small organic constituents (fraction b) goes to the lower end of the scheme. Those two fractions a) and b) cannot therefore be regarded as exclusively fractionated streams 2, 3 and 4, that is to say, monovalently enriched, multivalently enriched or organically enriched, respectively. Due to the mix of monovalent salts with a few - mainly small charged - organic substances and multivalent salts with - mainly uncharged and large - organic substances, the aforementioned two fractions a) and b) cannot be processed directly in sub-fractions 5 to 8, 8 to 13 and 14-15. In other words, each thereof fractions can be seen as a new aqueous feed stream 1 that will have to be separated into one or more fractionated streams 2, 3 and 4.

## Claims

1. A method for the treatment of an aqueous stream containing one or more constituents, such as ions, acids, bases, (dissolved) gases, organic matter, suspended solids, metals, and organic impurities, for obtaining one or more sub-streams in which the concentration of one or more constituents is increased compared to the starting aqueous stream, said method includes the following steps:
(i) The provision of an aqueous stream, in particular from a freshwater source,
(ii) The fractionation of the aqueous stream of (i) for obtaining three or more fractionated streams, wherein at least one of the fractionated streams thus obtained is chosen from the group of enriched in monovalent salts, one from the group of enriched in di- and multivalent salts and one from the group of enriched in organic compounds.
(iii) The treatment of one or more fractionated streams of (ii) for obtaining one or more sub-streams in which the concentration of one or more constituents is increased compared to the aqueous stream of (i),
wherein, before step (ii) is performed, the aqueous stream originating from step (i) is subjected to a pre-treatment for the removal of one or more of coarse solids, suspended solids, solutes, and dissolved gases.

2. A method according to claim 1, wherein a fractionated stream rich in monovalent salts compared to the concentration of monovalent salts in the aqueous stream according to (i) is treated in step (iii) for obtaining one or more sub-streams in which the concentration of one or more constituents is increased compared to the aqueous stream according to (i), wherein the constituents are chosen from the group of inorganic carbon, nitrogen compounds, saline and remaining compounds, or a combination thereof.

3. A method according to claim 2, wherein inorganic carbon is chosen from the group of HCO₃ and CO₂, or a combination thereof, wherein nitrogen compounds are chosen from N₂, NH₄, NH₃, NxO, comprising NO and N₂O, and NOx, or a combination thereof, wherein saline is chosen from Na, K, Cl and NO₃, or a combination thereof, wherein remaining compounds are chosen from CN, F, Br, Li, SiO₄, HS and Cu, or a combination thereof.

4. A method according to one or more of the preceding claims, wherein a fractionated stream rich in di- and multivalent salts compared to the concentration of di- and multivalent salts in the aqueous stream according to (i) is treated in step (iii) for obtaining one or more sub-streams in which the concentration of one or more constituents is increased compared to the aqueous stream according to (i), wherein the constituents are chosen from the group of saline, iron compounds, carbonate compounds, sulphate compounds, hydroxide compounds and remaining compounds, or a combination thereof.

5. A method according to claim 4, wherein saline is chosen from Na, K, Cl and NO3, or a combination thereof, wherein iron compounds are chosen from Fe, FeₓO_{y} and Fe(OH)₃, or a combination thereof, wherein carbonate compounds are chosen from CaCO₃, MgCO₃ and SrCO₃, or a combination thereof, wherein sulphate compounds are chosen from CaSO₄, MgSO₄ and BaSO₄, or a combination thereof, wherein remaining compounds are chosen from Mn, P, Se, As, Al, Cd, Pb, Ni and Co or a combination thereof, wherein hydroxide compounds are chosen from Ca(OH)₂ and Mg(OH)₂, or a combination thereof.

6. A method according to one or more of the preceding claims, wherein a fractionated stream rich in organic compounds compared to the concentration of organic compounds in the aqueous stream according to (i) is treated in step (iii) for obtaining one or more sub-streams in which the concentration of one or more constituents is increased compared to the aqueous stream according to (i), wherein the constituents are chosen from the group of natural organic matter and organic (micro)pollutants, or a combination thereof.

7. A method according to claim 6, wherein natural organic material includes humic materials, in particular wherein organic (micro) pollutants are chosen from PFAS and erythromycin A, or a combination thereof.

8. A method according to one or more of the preceding claims, wherein according to step ii) the fractionation of the aqueous stream according to i) for obtaining one or more fractionated streams, includes one or more process steps, chosen from the group of (biologically active) adsorption-media filtration including (granular) activated carbon filtration, biological activated carbon filtration with oxygen dosing (BODAC) and alternative adsorbents filtration with, for example, biochar, dexsorb or pillaring, (selective) capacitive de-ionization, (selective) electrodialysis including electrodialysis-reversal, donnan dialysis, bipolar membrane electrodialysis and monovalent-selective (capacitive) electrodialysis and other variations of this separation technique wherein by means of an electrical potential difference (and charge- or size-selective membranes between compartments) charged dissolved solids and/or ions are separated, fine filtration including fine sieves, micro sieves, dia-filtration, candle filtration, bag filtration and cloth filtration, flotation including dissolved air flotation (DAF), forward osmosis, coarse filtration including sand trap, grids and screens, ion exchange including cation resins, anion resins or chelating resins for salts or (charged) solutes including (organic) micropollutants, (biologically active) media filtration including fast sand filtration, slow sand filtration, continuous filtration (dynasand) and double layer filtration with, for example, an anthracite and sand layer, membrane contactors, membrane filtration including microfiltration, (spiral wound/capillary/ceramic) ultrafiltration, (spiral wound/capillary/ceramic) nanofiltration and reverse osmosis membrane filtration including osmotic mediated RO (OMRO), flow-reversal RO (FRRO) and closed-circuit RO (CCRO), natural purification steps including helophyte filters, water harmonicas, (waste) water purification ponds, (constructed) wetlands, bio-remediation systems and phyto-remediation systems, (advanced) oxidation including UV/H₂O₂, O₃, O₃/UV/H₂O₂ and electrochemical oxidation, oil-water separators, degassing including tower degassing, vacuum degassing and membrane degassing, softening including pellet softening and basin settling, pulverized coal dosing, foam fractionation, sedimentation including settling basins, coagulation flocculation with trivalent iron salt, coagulation flocculation with Ferrate, coagulation flocculation with trivalent aluminum-salt and lamellar settling, supercritical water treatment including supercritical water (co-)oxidation, supercritical water partial (co-)oxidation and supercritical water (co-)gasification, (eutectic freeze) crystallization including precipitation formation of, for example, salts or organic constituents, fermentation including aerobic and anaerobic treatment and upward anaerobic sludge blanket (UASB), liquid-liquid extraction including solvent extraction desalination and combinations of the above techniques for example in a single process unit operation, for example Electrocoagulation-Flotation-Sedimentation (EFS), Powdered Activated Carbon in Activated Sludge (PACAS), advanced oxidation coagulation by Ferrate dosing, (continuous) electro deionization and electrochemical adsorption by Nyex Rosalox.

9. A method according to one or more of the preceding claims, wherein according to step iii) the treatment of one or more fractionated streams obtained in accordance with (ii) for obtaining one or more sub-streams in which the concentration of one or more constituents is increased compared to the aqueous stream according to i), includes one or more process steps, chosen from the group of (biologically active) adsorption-media filtration including (granular) activated carbon filtration, biological activated carbon filtration with oxygen dosing (BODAC) and alternative adsorbents filtration with e.g. biochar, dexsorb or pillaring, aeration, (selective) capacitive deionization, clathrate desalination, complexing (e.g. with proteins), (selective) electrodialysis including electrodialysis-reversal, donnan dialysis, bipolar membrane electrodialysis and monovalent-selective (capacitive) electrodialysis and other variations of this separation technique wherein by means of an electric potential difference (and charge- or size-selective membranes between compartments) charged dissolved substances and/or ions are separated, fine filtration including fine sieves, micro sieves, dia-filtration, candle filtration, bag filtration and cloth filtration, flotation including dissolved air flotation (DAF), forward osmosis, thermal processing techniques including high pressure wet oxidation, low pressure wet oxidation, hydrothermal carbonization (HTC), hydrothermal liquefaction (HTL), pyrolysis, Themista, thermal pressure hydrolysis, Torwash treatment, combustion and gasification, humidification-dehumidification, ion exchange including cation resins, anion resins or chelating resins for salts or (charged) solutes including (organic) micropollutants, ball mill, (biologically active) media filtration including fast sand filtration, slow sand filtration, continuous filtration (Dynasand) and double layer filtration with, for example, an anthracite and sand layer, membrane bio reactors including aerobic and anaerobic treatment, membrane contactors, membrane filtration including microfiltration, (spiral wound/capillary/ceramic) ultrafiltration, (spiral wound/capillary/ceramic) nanofiltration and reverse osmosis membrane filtration including osmotic mediated RO (OMRO), flow-reversal RO (FRRO) and closed-circuit RO (CCRO), natural purification steps including helophyte filters, water harmonicas, (waste) water purification ponds, (constructed) wetlands, bio-remediation systems and phyto-remediation systems, (advanced) oxidation including UV/H₂O₂, O₃, O₃/UV/H₂O₂ and electrochemical oxidation, degassing including tower degassing, vacuum degassing and membrane degassing, softening including pellet softening and basin softening, plasma treatment, pulverized coal dosing, (advanced) reduction including UV/SO₃/I and vacuum-UV sulphite (VUV/SO₃), foam fractionation, sedimentation including settling basins, coagulation flocculation with trivalent iron salt, coagulation flocculation with Ferrate, coagulation flocculation with trivalent aluminum-salt and lamellae settling, supercritical water treatment including supercritical water (co-)oxidation, supercritical water partial (co-)oxidation and supercritical water (co-)gasification, UV irradiation including vacuum UV (VUV), (eutectic freeze) crystallization including precipitation formation of e.g. salts or organic constituents, evaporation techniques such as multi-effect distillation, mechanical vapor compression, sunlight/solar assisted evaporation, membrane distillation and multi-stage flash distillation, fermentation including aerobic and anaerobic treatment and upward anaerobic sludge blanket (UASB)), liquid-liquid extraction including solvent extraction desalination and combinations of the above techniques for example in a single process unit operation, e.g. Electrocoagulation-Flotation-Sedimentation (EFS), Powdered Activated Carbon in Activated Sludge (PACAS), advanced oxidation-coagulation by Ferrate dosing, (continuous) electro-ionization and electrochemical adsorption by Nyex Rosalox.

10. A method according to one or more of the preceding claims, wherein the aqueous stream is chosen from the group of freshwater, (light) brackish water, concentrated and/or mixed (fresh) water streams, groundwater, surface water, bank filtrate, dune filtrate, rainwater, irrigation water, cooling water, process water and incoming or (primary/secondary/tertiary/quaternary) (waste) water from a municipal wastewater treatment plant and industrial wastewater treatment, or a combination thereof.

11. The use of iron sludge obtained from a method according to one or more of claims 1-10 for the removal of one or more of phosphate, hydrogen sulphide and arsenic from an aqueous stream, in particular as a coagulant in the (waste) water treatment after acidification.

12. The use of iron sludge obtained from a method according to one or more of claims 1-10 as an ingredient for building materials, in particular in the brick industry.

13. The use of iron sludge obtained from a method according to one or more of claims 1-10 as a soil improver.

14. The use of sub-streams rich in one or more of Ca, Mg, SO₄, OH, HCO₃ and CO₂ obtained from a method according to one or more of claims 1-10 as a filler, in particular in cosmetic products, in particular for remineralisation for the production of drinking water, more specifically for the production of one or more of HCl, NaOH, KOH and HNO₃.

15. The use of sub-streams rich in Na(K)Cl(NO₃) obtained from a method according to one or more of claims 1-10 for the regeneration of one or more of highly acidic or basic, weakly acidic or basic and/or chelating cation- and anion-laden ion exchange resins, in the particularly as road salt, more specifically as process water for industrial applications.
